# FASCICULE DE BREVET EUROPEEN

(11) **EP 2 190 925 B1**
(45) Date de publication et mention de la délivrance du brevet: **22.08.2018**
(21) Numéro de dépôt: 08804304.7
(22) Date de dépôt: 17.09.2008
(51) Int. Cl.: C08L 77/00, C08L 61/06

(54) **COMPOSITION POLYAMIDE**
POLYAMIDZUSAMMENSETZUNG
POLYAMIDE COMPOSITION

(30) Priorité: 18.09.2007 FR 0706549
(43) Date de publication de la demande: 02.06.2010
(73) Titulaire: Rhodia Opérations, 93306 Aubervilliers (FR)
(72) Inventeur: VERGELATI, Caroll, F-38118 Sainte-baudille-de-la-tour (FR); CLEMENT, Florence, F-69510 Yzeron (FR); PEDUTO, Nicolangelo, I-20131 Milano (IT); ANDRES, Olivier, F-69780 Mions (FR)
(74) Mandataire: Schuck, Alexander
(86) Numéro de dépôt international: PCT/EP2008/062350
(87) Numéro de publication internationale: WO 2009/037276

(56) Documents cités:
- WO-A1-2008/135401
- WO-A1-2010/115951
- FR-A- 2 794 467
- FR-A1- 2 794 467
- JP-A- 2000 256 552
- US-A1- 2005 069 662
- DATABASE WPI Week 197242 Thomson Scientific, London, GB; AN 1972-67103T XP002479344 "Concrete mix - containing novolak phenolformaldehyde resin as plasticiser for improved properties" -& SU 329 150 A (LENINGRAD LENSOVET TECHNO) 1972

## Description

La présente invention concerne l'utilisation d'une résine novolaque pour augmenter la fluidité à l'état fondu d'une composition polyamide. L'invention concerne aussi une composition polyamide comprenant de la résine novolaque et son utilisation pour la fabrication d'articles plastiques, notamment par moulage par injection.

### ART ANTERIEUR

La demande de brevet JP 2000/256552 A décrit des composition ignifugées à base de polyamide, de résine phénolique et de phosphore rouge dans le but d'obtenir des articles présentant une très bonne résistance au feu.

Les compositions thermoplastiques à base de polyamide sont des matières premières susceptibles d'être transformées en pièces plastiques, notamment par moulage par injection.

Il existe au moins trois propriétés majeures que l'on souhaite obtenir pour ces compositions à base de polyamide, notamment lorsqu'on les utilise dans ces procédés de transformation.

La première de ces propriétés réside dans le fait que ces compositions thermoplastiques mises en oeuvre doivent être caractérisées, à l'état fondu, par une fluidité ou un comportement rhéologique compatible avec les procédés de mise en forme d'intérêt, tel que le moulage par injection. En effet, ces compositions thermoplastiques doivent être suffisamment fluides lorsqu'elles sont en fusion, pour pouvoir être acheminées et manipulées aisément et rapidement dans certains dispositifs de mise en forme, tels que par exemple le moulage par injection. On cherche également à augmenter les propriétés mécaniques de ces compositions. Ces propriétés mécaniques sont notamment la résistance aux chocs, le module en flexion ou en traction, la contrainte à la rupture en flexion ou en traction, entre autres. On utilise généralement à cet effet des charges de renfort, telles que des fibres de verre. Enfin, dans le cas des pièces moulées à partir de ces compositions thermoplastiques, on recherche un aspect de surface net et uniforme. Cette contrainte devient un problème difficile à résoudre particulièrement lorsqu'on utilise une composition thermoplastique fortement chargée en fibres de verre, ces fibres de verre altérant négativement l'aspect de surface des pièces moulées. Pour obtenir un aspect de surface acceptable, il est connu d'utiliser des compositions thermoplastiques présentant une haute fluidité. Toutefois, il résulte de cette augmentation de fluidité une diminution des propriétés mécaniques des articles obtenus.

Il en résulte ainsi qu'il est difficile d'obtenir pour une même composition thermoplastique à base de polyamide ces différentes propriétés.

### INVENTION

La demanderesse a découvert de manière tout a fait surprenante que l'utilisation d'une résine novolaque permettait d'augmenter la fluidité à l'état fondu d'une composition polyamide, notamment sans détériorer les propriétés mécaniques. Un niveau optimum de compromis entre la fluidité, l'aspect de surface et les propriétés mécaniques est notamment obtenu lorsque la composition polyamide comprend de 2 à 10 % en poids de résine novolaque, par rapport au poids total de la composition.

Il est connu de l'art antérieur d'utiliser une résine novolaque pour apporter une stabilité dimensionnelle à une composition polyamide, notamment en évitant la reprise en eau dudit polyamide. Toutefois, il n'a jamais été mis en évidence que la résine novolaque puisse jouer un rôle sur la rhéologie en fondu d'une composition polyamide. Au contraire même, cet effet est assurément surprenant au vu de ce qu'il était connu sur les résines novolaque. En effet, la résine novolaque est connue pour avoir un effet anti-plastifiant sur le polyamide à l'état solide tendant ainsi à rigidifier la structure dudit polymère, et laissant par conséquent penser à un effet viscosant sur le polyamide. Or, c'est exactement l'inverse qui est observé. En effet, la résine novolaque permet d'accroître la fluidité à l'état fondu du polyamide, combinant ainsi un effet fluidifiant à l'état fondu à un effet anti-plastifiant à l'état solide, tout en n'ayant pas d'influence sur la masse moléculaire du polyamide.

La présente invention a pour principal objet l'utilisation d'une résine novolaque pour augmenter la fluidité à l'état fondu d'une composition polyamide tel que définie à la revendication 1.

On observe notamment une augmentation particulièrement significative de la fluidité en fondu d'une composition polyamide comprenant une résine novolaque lorsque ladite composition est soumise à un cisaillement compris entre 100 et 5000 s⁻¹.

La composition polyamide selon l'invention comprenant au moins une résine novolaque présente préférentiellement un indice de viscosité IV supérieur ou égal à 100 ml/g, plus préférentiellement supérieur ou égal à 120 ml/g, selon la norme ISO 307.

Les polyamides sont le polyhexaméthylène adipamide, le polycaprolactame, ou les copolymères et mélanges entre le polyhexaméthylène adipamide et le polycaprolactame.

On utilise des polyamides de poids moléculaires adaptés aux procédés de moulage par injection, d'indice de viscosité IV compris entre 100 et 160 ml/g, selon la norme ISO 307.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 40 à 80 % en poids de polyamide, par rapport au poids total de la composition.

La résine novolaque est un produit de condensation du phénol et du formaldéhyde.

La structure moléculaire générique de la résine phénol formaldéhyde est notamment la suivante : 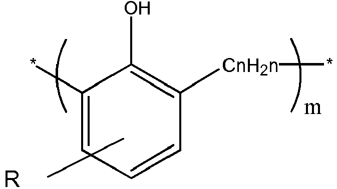 dans laquelle :
- R peut être un atome d'hydrogène, ou un groupe hydrocarboné
- n est compris entre 1 et 3
- m est compris entre 2 et 15, préférentiellement entre 2 et 10

Les résines novolaques utilisées ont avantageusement un poids moléculaire supérieur compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La composition selon l'invention comprend de 2 à 10 % en poids de résine novolaque par rapport au poids total de la composition. La composition polyamide peut comprendre de 1 à 25 % en poids, de résine novolaque par rapport au poids du polyamide.

La composition polyamide selon l'invention comprenant de la résine novolaque est notamment utilisée en tant que matrice, notamment pour l'obtention d'articles moulés.

Pour améliorer les propriétés mécaniques d'une composition polyamide selon l'invention, il peut être avantageux de lui adjoindre au moins une charge de renfort et/ou de remplissage préférentiellement choisie dans le groupe comprenant les charges fibreuses telles que les fibres de verre, les fibres de carbone et les fibres aramides, les charges minérales non fibreuses telles que les argiles, le kaolin, le mica, la wollastonite, la silice, le talc ou des nanoparticules. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 30 et 60 %.

La composition polyamide peut en outre comprendre un ou plusieurs autres polymères, de préférence des polymères thermoplastiques tels que le polyamide, les polyoléfines, l'ABS ou le polyester.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agent d'amélioration de la résilience comme des élastomères éventuellement greffés, les stabilisants lumière et/ou thermique, les antioxydants, les antistatiques les colorants, les pigments, les matifiants, les additifs d'aide au moulage ou autres additifs conventionnels.

On peut citer comme plastifiants ceux choisis parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxybenzoiques, tels que le parahydroxybenzoate d'éthyl-2 hexyle et le parahydroxybenzoate de décyl-2 hexyle, les esters ou éthers du tétrahydrofurfuryl alcool et les esters de l'acide citrique ou de l'acide hydroxy-malonique. La composition peut comprendre de 5 à 15 % en poids, par rapport au poids total de la composition de plastifiant.

Pour la réalisation d'une composition polyamide, ces charges et additifs peuvent être ajoutés au polyamide par des moyens usuels adaptés à chaque charge ou additif, tels que par exemple lors de la polymérisation ou en mélange en fondu. La résine novolaque est préférentiellement ajoutée au polyamide par voie fondue, notamment lors d'une étape d'extrusion du polyamide, ou par voie solide dans un mélangeur mécanique ; le mélange solide pouvant ensuite être mis en fusion, par exemple par un procédé d'extrusion.

La composition polyamide comprenant la résine novolaque peut également être utilisée, en tant qu'additif, notamment pour conférer certaines propriétés, notamment rhéologiques, dans des compositions comprenant en tant que matrice un polymère thermoplastique, notamment un (co)polyamide. L'invention concerne ainsi un procédé de fabrication d'une composition dans lequel on mélange à froid ou en fondu une composition polyamide comprenant de la résine novolaque avec une composition thermoplastique, notamment à base de (co)polyamide. Le mélange à froid peut ensuite être mis en fusion, par exemple par un procédé d'extrusion.

La composition polyamide comprenant la résine novolaque peut également comprendre une forte proportion d'additifs et être par exemple utilisée comme mélange maître (masterbatch) destiné à être mélange à une autre composition thermoplastique, notamment à base de polyamide.

Les compositions selon l'invention peuvent être utilisées comme matière première dans le domaine des plastiques techniques, par exemple pour la réalisation d'articles obtenus par moulage par injection, par injection/soufflage, par extrusion ou par extrusion soufflage. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exemple 1 :

Des compositions à base de polyamide (PA 66 A2700 de la société Rhodia, ayant un IV de 138 ml/g selon la norme ISO 307) sont obtenus par extrusion sur une extrudeuse double-vis ZSK40, en ajoutant 30 % en poids de fibres de verre par rapport au poids total de la composition, et des valeurs variables de résine novolaque (Rhénosin PR 95 de la société Rhein Chemie), par rapport au poids total de la composition.

Les caractéristiques de la mise en oeuvre sont les suivantes :
Extrudeuse double vis : W&P ZSK 40, avec
- un profil de température : 260 - 265 - 265 - 270 - 280°C
- vitesse de vis (rpm): 280
- couple moteur (N/m) : 35
- vide : - 0,9 bar

Des éprouvettes sont réalisées par moulage par injection de la manière suivante : Presse DEMAG 50 tonnes, vis de 35 mm
T (°C) fourreau: de 250 à 270
T (°C) moule : 80
Vitesse d'injection (cc/s) : 40,
Pression d'injection (bar) 150
Pression de maintien (bar) : 40
Contre pression (bar) : 15
Vitesse de vis (rpm) : 160

Différentes propriétés sont mesurées et mentionnées dans le Tableau 1 :

**Tableau 1**

| **Echantillon** | **C1** | **1** | **2** | **3** | **4** |
|---|---|---|---|---|---|
| Proportion de résine novolaque (%) | 0 | 4,2 | 5,6 | 7 | 8,4 |
| Longueur spirale (mm) | 392 | 419 | 442 | 467 | 496 |
| Choc Charpy entaillé (kJ/m²) | 10,8 | 11,5 | 10,5 | 10,2 | 10,4 |

La longueur spirale est mesurée selon le test d'écoulement spirale : Les moyennes des longueurs sont effectuées sur 30 pièces, après une mise en régime d'environ 100 pièces. Le test a été réalisé à une température fourreau de 280°C et de moule de 80°C, et avec une pression d'injection de 1500 bars. Lors de ce test, le gradient de cisaillement vu par le produit au seuil d'injection est de l'ordre de 1000 à 3000 s⁻¹, selon la viscosité du produit. Le but de ce test est de pouvoir comparer, pour un même volume injecté et une même pression d'injection, à des températures de fourreau et de moule fixées au préalable, la fluidité des différents produits. Cette différence est quantifiée par la longueur des spirales moulées. Plus le produit est fluide, plus la longueur spirale est élevée.

La résistance aux chocs Charpy entaillé est mesurée selon la norme ISO179/1 eA.

On observe ainsi une augmentation significative de la longueur spirale pour les compositions polyamides comprenant des proportions croissantes de résine novolaque, tout en évitant une dégradation manifeste de la résistance aux chocs desdites compositions.

### Exemple 1 :

Des compositions à base de polyamide (PA 66 A2700 ou PA 66 A2300, de plus basse viscosité en fondue, de la société Rhodia) sont obtenus par extrusion sur une extrudeuse double-vis ZSK40, en ajoutant 10 % en poids de plastifiant BBSA et 20 % en poids d'EPDM-g-MA, et des valeurs variables de résine novolaque (Rhénosin PR 95 de la société Rhein Chemie), par rapport au poids total de la composition.

Différentes propriétés sont mesurées et mentionnées dans le Tableau 2 :

**Tableau 2**

| **Echantillon** | **C2** | **5** | **6** | **7** |
|---|---|---|---|---|
| PA66 A2300 (%) | 65,0 | - | - | - |
| PA66 A2700 (%) | - | 61,5 | 58,0 | 55,0 |
| Résine Novolaque (%) | - | 3,5 | 7,0 | 10,0 |
| Longueur spirale (mm) | 395 | 420 | 440 | 445 |

On observe que l'ajout de résine novolaque permet d'obtenir des compositions polyamides présentant une forte fluidité en fondu, même en comparaison avec une composition polyamide ne comprenant pas de résine novolaque mais un polyamide de plus basse viscosité en fondue.

## Revendications

1. Utilisation d'une résine novolaque pour augmenter la fluidité à l'état fondu d'une composition polyamide,
**caractérisée en ce que** la composition comprend un polyamide choisi parmi le polyhexaméthylène adipamide, le polycaprolactame, et les copolymères et mélanges entre le polyhexaméthylène adipamide et le polycaprolactame, ledit polyamide présente un indice de viscosité IV compris entre 100 et 160 ml/g, selon la norme ISO 307
et
**caractérisée en ce que** la résine novolaque est un produit de condensation du phénol et du formaldéhyde, et **en ce que** la composition comprend de 2 à 10 % en poids de résine novolaque, par rapport au poids total de la composition.

2. Utilisation selon la revendication 1, **caractérisée en ce que** la composition comprend une charge de renfort et/ou de remplissage.

3. Utilisation selon l'une quelconque des revendications 1 à 2, **caractérisée en ce que** la composition comprend une charge de renfort et/ou de remplissage choisie dans le groupe comprenant les fibres de verre, les fibres de carbone et les fibres aramides, les argiles, le kaolin, le mica, la wollastonite, la silice, le talc ou des nanoparticules.

## Patentansprüche

1. Verwendung eines Novolakharzes zur Erhöhung der Schmelzefließfähigkeit einer Polyamidzusammensetzung,
**dadurch gekennzeichnet, dass** die Zusammensetzung ein Polyamid, das aus Polyhexamethylenadipamid, Polycaprolactam und Copolymeren und Mischungen von Polyhexamethylenadipamid und Polycaprolactam ausgewählt ist, umfasst, wobei das Polyamid eine Viskositätszahl VZ zwischen 100 und 160 ml/g gemäß ISO-Norm 307 aufweist
und
**dadurch gekennzeichnet, dass** es sich bei dem Novolakharz um ein Kondensationsprodukt von Phenol und Formaldehyd handelt und dass die Zusammensetzung 2 bis 10 Gew.-% Novolakharz, bezogen auf das Gesamtgewicht der Zusammensetzung, umfasst.

2. Verwendung nach Anspruch 1, **dadurch gekennzeichnet, dass** die Zusammensetzung einen verstärkenden und/oder streckenden Füllstoff umfasst.

3. Verwendung nach einem der Ansprüche 1 bis 2, **dadurch gekennzeichnet, dass** die Zusammensetzung einen verstärkenden und/oder streckenden Füllstoff aus der Gruppe umfassend Glasfasern, Kohlefasern und Aramidfasern, Tone, Kaolin, Glimmer, Wollastonit, Siliciumdioxid, Talk oder Nanopartikel umfasst.

## Claims

1. Use of a novolac resin for increasing the melt flow of a polyamide composition,
**characterized in that** the composition comprises a polyamide chosen from polyhexamethylene adipamide, polycaprolactam, and copolymers and blends of polyhexamethylene adipamide and polycaprolactam, said polyamide having a viscosity number VN of between 100 and 160 ml/g, according to the standard ISO 307
and
**characterized in that** the novolac resin is a product of condensation of phenol and of formaldehyde, and **in that** the composition comprises from 2% to 10% by weight of novolac resin, relative to the total weight of the composition.

2. Use according to Claim 1, **characterized in that** the composition comprises a reinforcing and/or bulking filler.

3. Use according to either one of Claims 1 and 2, **characterized in that** the composition comprises a reinforcing and/or bulking filler chosen from the group comprising glass fibres, carbon fibres and aramid fibres, clays, kaolin, mica, wollastonite, silica, talc or nanoparticles.
